# EUROPÄISCHE PATENTSCHRIFT

(11) **EP 1 097 311 B1**
(45) Veröffentlichungstag und Bekanntmachung des Hinweises auf die Patenterteilung: **14.05.2003**
(21) Anmeldenummer: 99934566.3
(22) Anmeldetag: 03.07.1999
(51) Int. Cl.: F16D 25/10, F16H 47/04

(54) **LAMELLENKUPPLUNG IN EINEM LEISTUNGSVERZWEIGTEN GETRIEBE**
MULTI-DISK CLUTCH IN A POWER SPLIT TRANSMISSION
EMBRAYAGE A DISQUES DANS UNE TRANSMISSION A COUPLE DIFFERENCIE

(30) Priorität: 10.07.1998 DE 19830951
(43) Veröffentlichungstag der Anmeldung: 09.05.2001
(73) Patentinhaber: ZF FRIEDRICHSHAFEN Aktiengesellschaft, 88038 Friedrichshafen (DE)
(72) Erfinder: BAUR, Erwin, D-88046 Friedrichshafen (DE); KONRAD, Helmut, D-88362 Aulendorf (DE); SIMON, Herbert, D-88046 Friedrichshafen (DE)
(86) Internationale Anmeldenummer: EP9904635
(87) Internationale Veröffentlichungsnummer: WO00003151

(56) Entgegenhaltungen:
- EP-A- 0 692 649
- EP-A- 0 718 517
- DE-A- 3 444 103
- DE-A- 4 324 809
- DE-A- 19 522 833
- US-A- 4 312 434
- US-A- 4 458 797
- US-A- 4 624 353

## Beschreibung

Die Erfindung bezieht sich auf eine Lamellenkupplung in einem leistungsverzweigten Getriebe zum Antrieb eines Mobilfahrzeuges, insbesondere eines Ackerschleppers. Der Einbauraum, insbesondere die radiale Erstreckung des Getriebes, ist begrenzt, deshalb darf das Getriebegehäuse eine Maximalausdehnung nicht übersteigen. Die Lamellenkupplung des Getriebes wird zum Reversieren des Fahrzeugs verwendet, wobei dieser Vorgang auch automatisiert ablaufen kann. Dabei muß die Kupplung dergestalt ausgeführt sein, daß die Schließkraft am Schaltkolben der Lamellenkupplung drehzahlunabhäng und ein Kalibrieren der Kupplung möglich ist. Bei geöffneter Kupplung müssen die Schleppverluste der Lamellen auf geringem Niveau gehalten werden, da bei einer Lamellenkupplung, welche als Wendekupplung verwendet wird, immer bei einer Kupplung im geöffneten Zustand die Lamellen im Gegenlauf durchtrieben werden müssen.

Aus der DE 195 22 833 ist ein Leistungsverzweigungsgetriebe bekanntgeworden, in dem zwei dem leistungsverzweigten Teil des Getriebes nachgeschalteten Lamellenkupplungen dergestalt angeordnet sind, daß durch Schließen der ersten Kupplung KV und Öffnen der zweiten Kupplung KR das Fahrzeug in eine Vorwärtsbewegung, durch Schließen der zweiten Kupplung und Öffnen der ersten Kupplung das Fahrzeug in eine Rückwärtsbewegung gebracht wird.
Indem die Kupplungen radial nebeneinander angeordnet sind wird ein großer radialer Bauraum benötigt.

Aus der DE 34 32 403 ist eine Lamellenklupplung, welche als Doppelkupplung ausgeführt ist, offenbart, bei der den drehzahlabhängigen hydraulischen Axialkräften am Schaltkolben die drehzahlabhängigen hydraulischen Axialkräfte an einem radial innen offenen Ausgleichszylinder mit einer Kammer, die bis zum Überlauf mit Kühlöl befüllt wird, entgegenwirken. Hierbei wird das Öl, welches dem Ausgleichskolben zugeführt wird, auch am Ausgleichszylinder vorbeigeleitet und entweicht über die Lamellen ins Getriebegehäuse. Hierbei wird bei geöffneter Kupplung, insbesondere bei tieferen Temperaturen und durch die dadurch entstehenden Schleppverluste in der Lamellenkupplung, der Wirkungsgrad verschlechtert.

Der Erfindung liegt die Aufgabe zugrunde, eine Doppelkupplung für ein leistungsverzweigtes Getriebe zu schaffen, welche sich durch eine kompakte Bauweise, geringe Anzahl von Teilen, einem verbesserten Wirkungsgrad sowie der Vermeidung von taumelnden Lamellen und der Eigenschaft, automatisiert schaltbar zu sein, auszeichnet.

Dies wird gemäß der Erfindung dadurch erreicht, daß die verwendete Kupplung eine Lamellenkupplung ist, welche nach dem Doppelkupplungsprinzip ausgeführt ist, welche dem leistungsverzweigten Teil des Getriebes nachgeschaltet ist, und deren Drehrichtung der beiden Einzelkupplungen entgegengesetzt sind, welches durch die Verwendung einer der rückwärts getriebenen Kupplung nachgeschalteten Vorgelegewelle erreicht wird. Durch diese Anordnung der Lamellenkupplung wird eine sehr kompakte und raumsparende Lösung erreicht. Durch diese Anordnung kann die Kupplung als Wendekupplung zum Reversieren des Fahrzeugs, durch Öffen beider Lamellenpakete als Trennkupplung, durch Schließen beider Lamellenpakete als Haltebremse, als Anfahrkupplung sowie als Bremse zur dynamischen Bremsunterstützung verwendet werden. Durch die Verwendung der Doppelkupplung als Wendekupplung, mit gegensinnig drehenden Einzelkupplungen, ist es möglich, die Kupplungen dergestalt auszulegen, daß sich bei geöffneten Kupplungen die von den Lamellenpaketen erzeugten Schleppmomente gegenseitig aufheben und somit auf das Fahrzeug kein Anfahrmoment erzeugt wird. Weiterhin ist es möglich, alle Zuführungen und Abführungen in der zentralen Welle, welche auch als drehmomentübertragende Durchführung für mögliche andere Antriebe verwendet werden kann, anzubringen, insbesonders kann die voneinander getrennte Zu- und Rückführung des Fluids für das Volumen des Ausgleichskolbens zur Kompensation der drehzahlabhängigen Axialkräfte durch die zentrale Welle erfolgen. Indem die Rückführung des Fluids für das Volumen des Ausgleichskolbens zur Kompensation der drehzahlabhängigen Axialkräfte durch die zenrale Welle erfolgt, wird der Wirkungsgrad dergestalt verbessert, daß das abfließende Fluid nicht durch die Lamellen geleitet wird und somit die Schleppmomente und damit verbundenen Verluste reduziert werden. Die Verbindungsbohrungen zum Schaltkolben sowie zum Ausgleichskolben befinden sich radial auf der gleichen Höhe, somit wird gewährleistet, daß die Rotationskräfte exakt ausgeglichen sind. Indem gleich große Flächen auf beiden Seiten des Schaltkolbens mit Fluid bedeckt sind, heben sich die drehzahlabhängigen Axialkräfte gegenseitig auf. Durch die drehzahlabhängigen Axialkräfte auf beiden Seiten des Schaltkolbens werden keine zusätzlichen Entleerventile für den druckbeaufschlagten Raum des Schaltkolbens benötigt. Zusätzlich kann in der Kupplungseinrichtung ein Ventil vorgesehen sein, welches einen Fluidstrom zur Kühlung der Lamellen der Kupplung nur dann zu den Lamellen freigibt, wenn die Kupplung geschlossen wird oder ist. Im geöffneten Zustand verschließt das Ventil den Zugang für den Fluidstrom ches zusätzlich die Schleppmomente reduziert und somit den Wirkungsgrad verbessert.
Um die Schaltung der Kupplung zu automatisieren ist es notwendig, daß die Kupplung kalibrierbar ist, hierzu muß es möglich sein, den Punkt erfassen zu können, an dem die Lamellen sich berühren, jedoch noch kein Drehmoment übertragen. In der Erfindung wird deshalb eine Federkennlinie, welche sich aus der Federkraft für die Kolbenrückstelung und der Wellkraft der Lamellen zusammensetzt, dergestalt verwendet, daß die Kennlinie immer steigend ist. Somit ist es möglich, der Steuerung der Kupplung zu jedem Kupplungsdruck bzw. Federkraft einen bestimmten Weg des Kolbens zuzuordnen.

Um das Schleppmoment der Lamellen weiter zu reduzieren ist es notwendig, die Lamellen auf einem definierten Abstand zu halten.

Deshalb sind die Außenlamellen bei dieser Erfindung in einfacher Weise über Wellfedern zwischen den Außenlamellen auf einem definierten Abstand gehalten. Durch die Verwendung der Wellfedern wird sichergestellt, daß ein Taumeln der Lamellen verhindert wird, welches eine unzulässige Erwärmung der Lamellen verhindert.

In den Zeichnungen ist ein Ausführungsbeispiel der Erfindung dargestellt, welches nachfolgend näher erläutert wird.

Ein leistungsverzweigtes Getriebe weist eine zentrale Welle 1 auf, welche die Antriebswelle des Getriebes ist, und treibt die erste Planetenstufe der Schaltwalze, die hydrostatische Verstelleinheit, an und kann an ihrer, dem Getriebeeingang abgewandten Seite, als Durchtrieb verwendet werden. Die Lamellenkupplung ist in der axialen Verlängerung der Schaltwalze angeordnet und das Zylindergehäuse ist mit dem Abtrieb der Schaltwalze verbunden. Der innere Lamellenträger der Rückwärtskupplung ist über eine Verzahnung über eine Zwischenwelle mit dem Abtrieb des Getriebes verbunden. Der innere Lamellenträger der Vorwärtskupplung ist über eine Verzahnung direkt mit dem Abtrieb verbunden. Wird die Rückwärtskupplung geschlossen, und die Vorwärtskupplung geöffnet, wird der Abtrieb über die Zwischenwelle in eine rückwärtsdrehende Richtung bewegt. Wird die Vorwärtskupplung geschlossen, und die Rückwärtskupplung geöffnet, wird der Abtrieb in eine vorwärtsdrehende Richtung bewegt. Sind die Vorwärtskupplung und die Rückwärtskupplung geschlossen, so wird der Antriebsstrang verblockt.

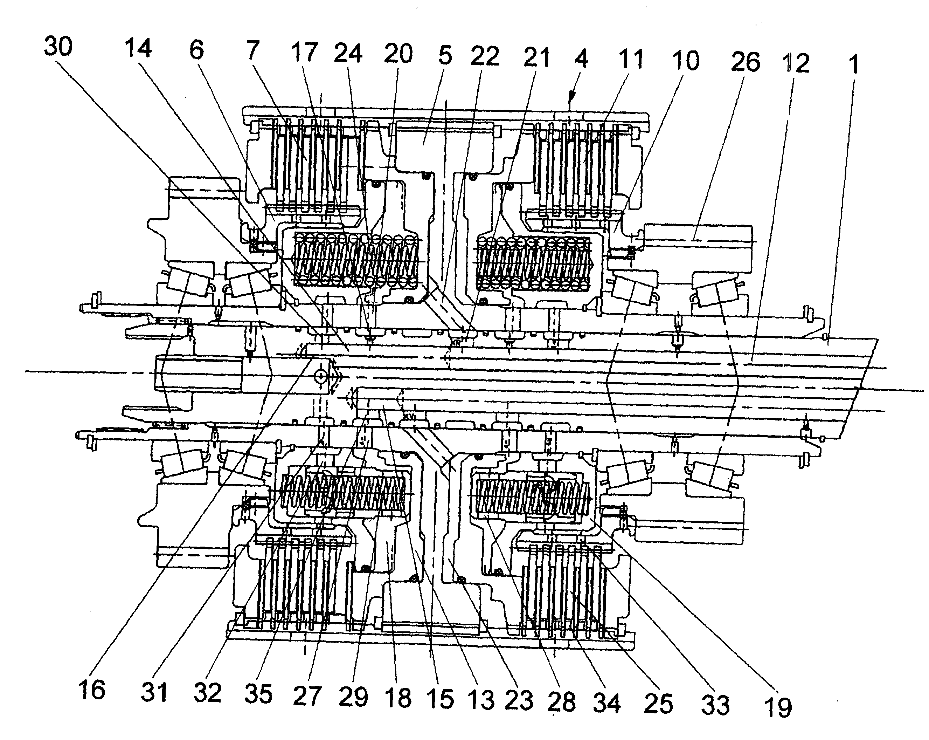

Die einzige Figur zeigt ein konstruktives Beispiel einer Lamellenkupplung. Da die Bauteile und die Funktionen der beiden Einzelkupplungen dieser Lamellenkupplung, welche als Doppelkupplung ausgeführt ist, gleich sind, wird nur eine Kupplung beschrieben.
Die Lamellenkupplung 4 umgibt die zentrale Welle 1 koaxial, die Zuführung 12 für die Druckbeaufschlagung des Schaltkolbens 13, die Zuführung 14 für die drehzahlabhängigen Ausgleichskräfte sowie deren Rückführung 15 und die Zuführung 16 des Kühlfluids sind in der zentralen Welle 1 angeordnet.
Über eine Querbohrung 17 mit verengtem Querschnitt in der zentralen Welle 1 gelangt von der Zuführung 14 über eine Querbohrung 20 im Zylindergehäuse 5 Fluid in einen Raum 18, welcher durch den Schaltkolben 13 und den Federträger 19 begrenzt wird. Durch Drehbewegung des Zylindergehäuses 5, des Federträgers 19 und des Schaltkolbens 13 wird das Fluid im Raum 18 ebenfalls in Drehbewegung versetzt und übt eine drehzahlabhängige Kraft auf den Schaltkolben 13 und den Federträger 19, welcher auf dem Zylindergehäuse in axialer Richtung fixiert ist, aus. Das Fluid im Raum 18 wird über eine Querbohrung 27 im Zylindergehäuse 5 über eine Querbohrung 35 in der zentralen Welle in die Rückführung 15 abgeführt. Somit wird das Fluid nicht durch die Lamellen abgeleitet und erzeugt keine zusätzlichen Schleppverluste in den Lamellen. Über eine Querbohrung 21 in der zentralen Welle 1 gelangt von der Zuführung 12 über eine Querbohrung 22 im Zylindergehäuse 5 Fluid in einen Raum 23, welcher durch den Schaltkolben 13 und das Zylindergehäuse 5 begrenzt wird. Durch Drehbewegung des Zylindergehäuses 5, und des Schaltkolbens 13 wird das Fluid im Raum 23 ebenfalls in Drehbewegung versetzt und übt eine drehzahlabhängige Kraft auf den Schaltkolben 13 aus. Die drehzahlabhängigen Kräfte auf beiden Seiten des Schaltkolbens 13 heben sich gegenseitig auf. Wird der Druck im Raum 23 erhöht, so bewegt sich der Schaltkolben 13 gegen die Rückstellkraft der Federn 24 in Richtung Federträger 19 und bringt die Lamellen 25 zur Anlage. Ist der Druck im Raum 23 hoch genug, so wird eine kraftschlüssige Verbindung vom Zylindergehäuse 5 zur Verzahnung 26 hergestellt, welche zur Drehmomentübertragung geeignet ist. Während die Lamellen 25 zur Anlage gebracht werden, wird durch die axiale Verschiebung des Schaltkolbens 13 ein Ventil 28, welches über eine Feder 29 am Schaltkolben 13 anliegt, ebenfalls in axialer Richtung verschoben, und vebindet die Zuführung 16 über eine Querbohrung 30, eine Querbohrung 31 und eine Querbohrung 32 sowie Querbohrungen 33 im Lamellenträger 6 mit den Lamellen 25. Somit gelangt während des Schließvorgangs der Kupplung und im geschlossenen Zustand Kühlfluid zu den Lamellen 25. Wird der Druck im Raum 23 abgesenkt, so bewegt sich der Schaltkolben 13 durch die Rückstellkraft der Federn 24 in Richtung Zylindergehäuse 5 und öffnet die Lamellen 25. Gleichzeitig unterbricht das Ventil 28 die Verbindung zu den Lamellen 25. Im geöffneten Zustand werden die Lamellen nicht mehr mit Kühlfluid durchströmt, welches die Schleppverluste verringert und somit den Wirkungsgrad verbessert. Die Wellfedern 34 zwischen den Lamellen 25 verhindern ein Taumeln der Lamellen 25 und die Lamellen 25 werden auf einem definierten Abstand gehalten, wodurch die Schleppmomente und die Erwärmung der Lamellen reduziert bzw. der Wirkungsgrad verbessert wird.

### Bezugszeichen

- 1: zentrale Welle
- 4: Lamellenkupplung
- 5: Zylindergehäuse
- 6: Lamellenträger
- 7: Rückwärtskupplung
- 10: Lamellenträger
- 11: Vorwärtskupplung
- 12: Zuführung
- 13: Schaltkolben
- 14: Zuführung
- 15: Rückführung
- 16: Zuführung
- 17: Querbohrung
- 18: Raum
- 19: Federträger
- 20: Querbohrung
- 21: Querbohrung
- 22: Querbohrung
- 23: Raum
- 24: Federn
- 25: Lamellen
- 26: Verzahnung
- 27: Querbohrung
- 28: Ventil
- 29: Feder
- 30: Querbohrung
- 31: Querbohrung
- 32: Querbohrung
- 33: Querbohrung
- 34: Wellfeder
- 35: Querbohrung

## Patentansprüche

1. Leistungsverzweigtes Getriebe mit hydraulisch betätigten Lamellenkupplungen zur Wahl der Fahrtrichtung, welche einem leistungsverzweigten Teil des Getriebes nachgeschaltet angeordnet sind, bei welchen ein Zylindergehäuse (5) einen Schaltkolben (13) aufnimmt, welcher bei Betätigung gegen eine von Federn (24) erzeugte Federkraft bewegt wird und damit Lamellen (25) mit ölgekühlten Reibflächen zur Anlage bringt, **dadurch gekennzeichnet, daß** die Lamellenkupplungen zur Wahl der Fahrtrichtung zu einer Doppelkupplung mit gemeinsamem Zylindergehäuse (5), welches gleichzeitig zur Drehmomentübertragung dient, vereinigt sind, wobei die Lamellenkupplungen gegensinnige Drehrichtungen aufweisen.

2. Leistungsverzweigtes Getriebe mit hydraulisch betätigten Lamellenkupplungen nach Anspruch 1, **dadurch gekennzeichnet, daß** die drehzahlabhängigen hydraulischen Axialkräfte an den Schaltkolben (13) vorzugsweise bei geschlossener Kupplung ausgeglichen werden durch drehzahlabhängige hydraulische Axialkräfte an der gegenüberliegenden Seite der Schaltkolben (13) und daß die Zuund Rückführung des Fluids in einen dem Druckraum der Schaltkolben gegenüberliegenden Raum (18) über Bohrungen in einer zentralen Welle (1) innerhalb des Zylindergehäuses (5) stattfindet.

3. Leistungsverzweigtes Getriebe mit hydraulisch betätigten Lamellenkupplungen nach Anspruch 2, **dadurch gekennzeichnet, daß** der Raum (18), der einem Druckraum des Schaltkolbens (13) gegenüberliegt, eine flüssigkeitsdichtende Trennung zu den Lamellen (25) aufweist.

4. Leistungsverzweigtes Getriebe mit hydraulisch betätigten Lamellenkupplungen nach Anspruch 1, **dadurch gekennzeichnet, daß** jede Lamellenkupplung ein von den Schaltkolben (13) betätigtes Ventil (28) aufweist, welches eine Bohrung in einer zentralen Welle (1) mit Fluid zur Kühlung mit den Lamellen (25) der Lamellenkpplung während des Schließvorgangs der Lamellenkupplung und im geschlossenen Zustand der Lamellenkupplungen verbindet, und diese Verbindung im offenen Zustand der Lamellenkupplungen trennt.

5. Leistungsverzweigtes Getriebe mit hydraulisch betätigten Lamellenkupplungen nach Anspruch 1, **dadurch gekennzeichnet, daß** zwischen den Lamellen (25) Wellfedern (34) vorhanden sind, welche die Lamellen (25) auf einem definierten Abstand halten.

6. Leistungsverzweigtes Getriebe mit hydraulisch betätigten Lamellenkupplungen nach Anspruch 1, **dadurch gekennzeichnet, daß** die Federkraft zur Rückstellung des Schaltkolbens (13) immer steigend ist.

## Claims

1. Power split transmission having hydraulically actuated multi-disc clutches for selecting the direction of travel, which are disposed downstream of a power split part of the transmission and in which a cylinder housing (5) receives a gear shift piston (13), which upon actuation is moved counter to a spring force generated by springs (24) and hence brings discs (25) with oil-cooled friction surfaces into abutment,
**characterized in that** the multi-disc clutches for selecting the direction of travel are combined into a dual clutch with a common cylinder housing (5), which is simultaneously used for torque transmission, wherein the multi-disc clutches have opposite directions of rotation.

2. Power split transmission having hydraulically actuated multi-disc clutches according to claim 1,
**characterized in that** the speed-dependent hydraulic axial forces on the gear shift pistons (13) are compensated preferably in the closed state of the clutch by speed-dependent hydraulic axial forces on the opposite side of the gear shift pistons (13) and that the feed and return of the fluid into a chamber (18) opposite the pressure chamber of the gear shift pistons occurs via bores in a central shaft (1) inside the cylinder housing (5).

3. Power split transmission having hydraulically actuated multi-disc clutches according to claim 2,
**characterized in that** the chamber (18), which lies opposite a pressure chamber of the gear shift piston (13), has a liquid-sealing separation from the discs (25).

4. Power split transmission having hydraulically actuated multi-disc clutches according to claim 1,
**characterized in that** each multi-disc clutch comprises a valve (28), which is actuated by the gear shift pistons (13) and which connects a bore in a central shaft (1) having cooling fluid to the discs (25) of the multi-disc clutch during the closing operation of the multi-disc clutch and in the closed state of the multi-disc clutches, and breaks said connection in the open state of the multi-disc clutches.

5. Power split transmission having hydraulically actuated multi-disc clutches according to claim 1,
**characterized in that** provided between the discs (25) are ondular washers (34), which hold the discs (25) a defined distance apart.

6. Power split transmission having hydraulically actuated multi-disc clutches according to claim 1,
**characterized in that** the spring force for restoring the gear shift piston (13) is always rising.

## Revendications

1. Transmission à ramification de puissance, comprenant des embrayages à disques actionnés hydrauliquement pour la sélection du sens de la marche, qui sont disposés en aval d'une partie à ramification de puissance de la transmission, dans lesquels un corps de cylindre (5) renferme un piston de manoeuvre (13), lequel, lorsqu'il est actionné, se déplace à l'encontre d'une force élastique produite par des ressorts (24) et, sous cet effet, met des disques (25) en appui contre des surfaces de frottement refroidies par l'huile, **caractérisée en ce que** les embrayages à disque destinés à la sélection du sens de la marche sont réunis en un embrayage double comportant un corps de cylindre commun (5) qui sert en même temps à la transmission du couple, les embrayages à disque présentant des sens de rotation opposés.

2. Transmission à ramification de puissance, comprenant des embrayages à disques actionnés hydrauliquement selon la revendication 1, **caractérisée en ce que** les forces axiales hydrauliques fonction de la vitesse de rotation, exercées sur le piston de manoeuvre (13) sont, lorsque l'embrayage est serré, de préférence équilibrées par des forces axiales hydrauliques fonction de la vitesse de rotation sur le côté opposé du piston de manoeuvre (13), et **en ce que** l'acheminement du fluide dans une chambre (18), qui est à l'opposé de la chambre de pression du piston de manoeuvre, et son retour s'effectuent en passant par des perçages ménagés dans un arbre central (1) à l'intérieur du corps de cylindre (5).

3. Transmission à ramification de puissance, comprenant des embrayages à disques actionnés hydrauliquement selon la revendication 2, **caractérisée en ce que** la chambre (18), qui est à l'opposé d'une chambre de pression du piston de manoeuvre (13), comporte une séparation étanche aux fluides par rapport aux disques (25).

4. Transmission à ramification de puissance, comprenant des embrayages à disques actionnés hydrauliquement selon la revendication 1, **caractérisée en ce que** chaque embrayage à disque comporte une soupape (28) actionnée par le piston de manoeuvre (13) et qui relie un perçage d'un arbre central (1) contenant du fluide de refroidissement aux disques (25) de l'embrayage à disques pendant le processus de serrage de l'embrayage à disques et dans l'état serré des embrayages à disque, et interrompt cette liaison dans l'état ouvert des embrayages à disques.

5. Transmission à ramification de puissance, comprenant des embrayages à disques actionnés hydrauliquement selon la revendication 1, **caractérisée en ce que**, entre les disques (25), sont prévus des ressorts zigzag (34) qui maintiennent les disques (25) à un écartement défini.

6. Transmission à ramification de puissance, comprenant des embrayages à disques actionnés hydrauliquement selon la revendication 1, **caractérisée en ce que** la force élastique servant au rappel du piston de manoeuvre (13) est constamment croissante.
